# EUROPEAN PATENT SPECIFICATION

(11) **EP 3 273 357 B1**
(45) Date of publication and mention of the grant of the patent: **19.05.2021**
(21) Application number: 15892343.3
(22) Date of filing: 09.09.2015
(51) Int. Cl.: G06F 13/28

(54) **DMA CONTROLLER, IMPLEMENTATION METHOD AND COMPUTER STORAGE MEDIUM**
DMA-STEUERGERÄT, IMPLEMENTIERUNGSVERFAHREN UND COMPUTERSPEICHERMEDIUM
CONTRÔLEUR DMA, PROCÉDÉ D'IMPLÉMENTATION ET SUPPORT DE STOCKAGE INFORMATIQUE

(30) Priority: 21.05.2015 CN 201510264291
(43) Date of publication of application: 24.01.2018
(73) Proprietor: Sanechips Technology Co., Ltd., Nanshan District Shenzhen, Guangdong 518055 (CN)
(72) Inventor: WEN, Bo, Shenzhen Guangdong 518085 (CN)
(74) Representative: J A Kemp LLP
(86) International application number: PCT/CN2015/089243
(87) International publication number: WO 2016/183965

(56) References cited:
- CN-A- 101 273 338
- CN-A- 102 567 254
- CN-A- 103 597 416
- US-A1- 2013 262 538
- US-B2- 8 037 217

## Description

### TECHNICAL FIELD

The present disclosure relates to the field of processors, in particular to a Direct Memory Access (DMA) controller, a method for implementing a DMA controller, and a computer-readable storage medium.

### BACKGROUND

DMA control may apply widely to processors and System-on-a-Chip (SoC). A DMA controller may serve to implement high-speed data transmission between an Input/Output (I/O) interface and memory. The DMA controller may serve as a peripheral module of a processor. The DMA controller may receive a parameter configuration sent by a processor core to perform data transport. Like the processor core, the DMA controller may serve as a Master to access a storage resource external to the processor and memory internal to the processor to allow rapid data transport between a system memory external to the processor and Data Memory (DM) as well as Program Memory (PM) internal to the processor, without the need for the processor core to use an internal register thereof to perform inefficient data transfer. Having configured the DMA controller, the processor core may select to do another thing, with a data-transport task handled by the DMA controller in the background. In short, a DMA controller may be dedicated to massive data transport, which is not really what the processor core is good at. The processor core may then get away and do what it is good at.

An existing DMA controller merely serves to perform simple data transport, where destination data are consistent with source data, with the same amount of data. The processor core often may have to perform massive amount of data operations, such as a floating-point operation. Compared to fixed-point data, more bits may be required to denote floating-point data due to a precision requirement. Therefore, data in a floating-point format take up a storage space greater than that taken by the same data in a fixed-point format. Given limited memory storage resources, storage space of external memory of the processor (memory external to the processor) may be saved if the external memory stores fixed-point data. The fixed-point data may be transported to internal memory of the processor via DMA controller. However, the processor may still have to perform fixed-to-floating conversion on the fixed-point data in the internal memory before the floating-point operation can be performed, which puts an additional operational load on the processor core. If floating-point data are stored in the external memory, then after the floating-point data are transported by the DMA controller, the processor core may perform the floating-point operation directly. However, the floating-point data now take up more storage space of the external memory.

### SUMMARY

In view of this, embodiments herein provide a DMA controller, a method for implementing a DMA controller, and a computer-readable storage medium, capable of saving an external storage resource of a processor while reducing an operational load of the processor.

To this end, a technical solution according to an embodiment herein may be implemented as follows.

According to an embodiment herein, a DMA controller includes: an input interface for a read data channel; an output interface to a write data channel; a control-logic module; and a First In First Out (FIFO) module. The DMA controller further includes a first converter, a first data selector, a second converter, and a second data selector.

The first converter is configured for: in response to receiving a first instruction, performing a first operation on first data read from an external memory via the input interface for the read data channel. The first instruction instructs the first converter to perform the first operation.

The first data selector is configured for: in response to determining that a data operation is to be performed, selecting data processed by the first converter, and writing the data processed by the first converter into the FIFO module.

The second converter is configured for: in response to receiving a second instruction, performing a second operation on second data read from the FIFO module. The second instruction instructs the second converter to perform the second operation.

The second data selector is configured for: in response to determining that a data operation is to be performed, selecting data processed by the second converter, and outputting the data processed by the second converter to the output interface to the write data channel.

The DMA controller may be connected to the external memory via an Advanced eXtensible Interface (AXI) bus. The AXI bus may be 64-bit wide.

The first data selector may be further configured for: in response to determining that no data operation is to be performed, directly selecting the first data read from the input interface for the read data channel, and writing the first data into the FIFO module.

The second data selector may be further configured for: in response to determining that no data operation is to be performed, directly selecting the second data read from the FIFO module, and outputting the second data to the output interface to the write data channel.

The first converter may be further configured for: performing the first operation with a ratio of an amount of input data to an amount of output data of 3:4.

The second converter may be further configured for: performing the second operation with a ratio of an amount of input data to an amount of output data of 4:3.

The first converter may be further configured for: performing, on each group of 3 64-bit fixed-point numbers, operations as follows:
in step a1, performing fixed-to-floating conversion on bit[47:0] of a first 64-bit fixed-point number; and writing, into FIFO_0 and FIFO_1 via the first data selector, the bit[47:0] of the first 64-bit fixed-point number having gone through the fixed-to-floating conversion;
in step a2, performing the fixed-to-floating conversion on bit[63:48] of the first 64-bit fixed-point number and bit[55:0] of a second 64-bit fixed-point number; and writing, into FIFO_2, FIFO_3, and FIFO_4 via the first data selector, the bit[63:48] of the first 64-bit fixed-point number and the bit[55:0] of the second 64-bit fixed-point number having gone through the fixed-to-floating conversion;
in step a3, performing the fixed-to-floating conversion on bit[63:56] of the second 64-bit fixed-point number and bit[63:0] of a third 64-bit fixed-point number; and writing, into FIFO_5, FIFO_6, and FIFO_7 via the first data selector, the bit[63:56] of the second 64-bit fixed-point number and the bit[63:0] of the third 64-bit fixed-point number having gone through the fixed-to-floating conversion.

The FIFO module may consist of 8 32-bit FIFO sub-modules denoted respectively by FIFO_0, FIFO_1, FIFO_2, FIFO_3, FIFO_4, FIFO_5, FIFO_6, and FIFO_7.

The second converter may be further configured for:
in step b1, sending, to the second data selector, bit[63:0] of a 72-bit fixed-point number produced by floating-to-fixed conversion on data read from {FIFO_2, FIFO_1, FIFO_0}, to allow the second data selector to select the bit[63:0] of the 72-bit fixed-point number and send the bit[63:0] of the 72-bit fixed-point number into a data writing AXI bus via the output interface to the write data channel;
in step b2, sending, to the second data selector, bit[55:0] of a 72-bit fixed-point number produced by the floating-to-fixed conversion on data read from {FIFO_5, FIFO_4, FIFO_3} and bit[71:64] of the 72-bit fixed-point number produced by the floating-to-fixed conversion on the data read from the {FIFO_2, FIFO_1, FIFO_0}, to allow the second data selector to select the sent data and send the selected data into the data writing AXI bus via the output interface to the write data channel;
in step b3, sending, to the second data selector, bit[47:0] of a 48-bit fixed-point number produced by the floating-to-fixed conversion on data read from {FIFO_7, FIFO_6 } and bit[71:56] of the 72-bit fixed-point number produced by the floating-to-fixed conversion on the data read from the {FIFO_5, FIFO_4, FIFO_3}, to allow the second data selector to select the sent data and send the selected data into the data writing AXI bus via the output interface to the write data channel;
in step b4, repeating from step b1;

The FIFO module may consist of 8 32-bit FIFO sub-modules denoted respectively by FIFO_0, FIFO_1, FIFO_2, FIFO_3, FIFO_4, FIFO_5, FIFO_6, and FIFO_7.

The DMA controller may access the external memory in a burst-12 mode in a mode of the first operation or the second operation. The DMA controller may access the external memory in a burst-16 mode in a normal transport mode.

According to an embodiment herein, a DMA controller includes an input interface for a read data channel, an output interface to a write data channel, a control-logic module, and a First In First Out (FIFO) module. A method for implementing the DMA controller includes:
in response to receiving a first instruction, performing a first operation on first data read from an external memory via the input interface for the read data channel, wherein the first instruction instructs to perform the first operation;
in response to determining that a data operation is to be performed, selecting data having gone through the first operation, and writing the data having gone through the first operation into the FIFO module;
in response to receiving a second instruction, performing a second operation on second data read from the FIFO module, wherein the second instruction instructs to perform the second operation;
in response to determining that a data operation is to be performed, selecting data having gone through the second operation, and outputting the data having gone through the second operation to the output interface to the write data channel.

The DMA controller may be connected to the external memory via an Advanced eXtensible Interface (AXI) bus. The AXI bus may be 64-bit wide.

The method may further include:
in response to determining that no data operation is to be performed, directly selecting the first data read from the input interface for the read data channel, and writing the first data into the FIFO module;
in response to determining that no data operation is to be performed, directly selecting the second data read from the FIFO module, and outputting the second data to the output interface to the write data channel.

The method may further include:
performing the first operation with a ratio of an amount of input data to an amount of output data of 3:4;
performing the second operation with a ratio of an amount of input data to an amount of output data of 4:3.

The first operation may be performed on the first data read from the external memory via the input interface for the read data channel, and the data having gone through the first operation may be selected, in response to determining that the data operation is to be performed, and be written into the FIFO module by performing, on each group of 3 64-bit fixed-point numbers, operations as follows:
in step a1, performing fixed-to-floating conversion on bit[47:0] of a first 64-bit fixed-point number; and writing, into FIFO_0 and FIFO_1, the bit[47:0] of the first 64-bit fixed-point number having gone through the fixed-to-floating conversion;
in step a2, performing the fixed-to-floating conversion on bit[63:48] of the first 64-bit fixed-point number and bit[55:0] of a second 64-bit fixed-point number; and writing, into FIFO_2, FIFO_3, and FIFO_4, the bit[63:48] of the first 64-bit fixed-point number and the bit[55:0] of the second 64-bit fixed-point number having gone through the fixed-to-floating conversion;
in step a3, performing the fixed-to-floating conversion on bit[63:56] of the second 64-bit fixed-point number and bit[63:0] of a third 64-bit fixed-point number; and writing, into FIFO_5, FIFO_6, and FIFO_7, the bit[63:56] of the second 64-bit fixed-point number and the bit[63:0] of the third 64-bit fixed-point number having gone through the fixed-to-floating conversion.

The FIFO module may consist of 8 32-bit FIFO sub-modules denoted respectively by FIFO_0, FIFO_1, FIFO_2, FIFO_3, FIFO_4, FIFO_5, FIFO_6, and FIFO_7.

The second operation may be performed on the second data read from the FIFO module, and the data having gone through the second operation may be selected, in response to determining that the data operation is to be performed, and be output to the output interface to the write data channel by:
in step b1, sending, into a data writing AXI bus via the output interface to the write data channel, bit[63:0] of a 72-bit fixed-point number produced by floating-to-fixed conversion on data read from {FIFO_2, FIFO_1, FIFO_0};
in step b2, sending, into the data writing AXI bus via the output interface to the write data channel, bit[55:0] of a 72-bit fixed-point number produced by the floating-to-fixed conversion on data read from {FIFO_5, FIFO_4, FIFO_3} and bit[71:64] of the 72-bit fixed-point number produced by the floating-to-fixed conversion on the data read from the {FIFO_2, FIFO_1, FIFO_0};
in step b3, sending, into the data writing AXI bus via the output interface to the write data channel, bit[47:0] of a 48-bit fixed-point number produced by the floating-to-fixed conversion on data read from {FIFO_7, FIFO_6 } and bit[71:56] of the 72-bit fixed-point number produced by the floating-to-fixed conversion on the data read from the {FIFO_5, FIFO_4, FIFO_3};
in step b4, repeating from step b1.

The FIFO module may consist of 8 32-bit FIFO sub-modules denoted respectively by FIFO_0, FIFO_1, FIFO_2, FIFO_3, FIFO_4, FIFO_5, FIFO_6, and FIFO_7.

The DMA controller may access the external memory in a burst-12 mode in a mode of the first operation or the second operation. The DMA controller may access the external memory in a burst-16 mode in a normal transport mode.

According to an embodiment herein, a non-transitory computer-readable storage medium stores therein a computer program for executing the method for implementing the DMA controller.

With the DMA controller, the method for implementing the DMA controller, and the computer-readable storage medium according to embodiments herein, in response to receiving a first instruction, a first operation is performed on first data read from an external memory via an input interface for a read data channel; the first instruction instructs to perform the first operation; in response to determining that a data operation is to be performed, data having gone through the first operation are selected and written into the FIFO module; in response to receiving a second instruction, a second operation is performed on second data read from the FIFO module; the second instruction instructs to perform the second operation; in response to determining that a data operation is to be performed, data having gone through the second operation are selected and output to an output interface to a write data channel. Thus, with a technical solution according to at least one embodiments herein, a storage resource of a processor may be saved while reducing an operational load of a processor core, extending function of the DMA controller by allowing it not only to transport data, but also to perform the first operation and the second operation, thereby saving space of the external memory, reducing an operational pressure on the processor core.

### BRIEF DESCRIPTION OF THE DRAWINGS

FIG.1 is a diagram of a structure of a DMA controller according to an embodiment herein.
FIG.2 is a diagram of a data flow of a DMA controller according to an embodiment herein.
FIG.3 is a diagram of a format of storing first data according to an embodiment herein.
FIG.4 is a diagram of hardware design for implementing fixed-to-floating conversion and floating-to-fixed conversion according to an embodiment herein.
FIG.5 is a flowchart of a method for implementing a DMA controller according to an embodiment herein.
FIG.6 is a flowchart of fixed-to-floating conversion according to an embodiment herein.
FIG.7 is a flowchart of floating-to-fixed conversion according to an embodiment herein.

### DETAILED DESCRIPTION

A technical solution herein may be further elaborated below with reference to drawings and embodiments.

Note that in embodiments herein below, the term AMBA is abbreviation for Advanced Microcontroller Bus Architecture, the term AXI is abbreviation for Advanced eXtensible Interface, the term PM is abbreviation for Program Memory, the term DM is abbreviation for Data Memory, the term FIFO is abbreviation for First In First Out, and a Multiplexer, abbreviated as MUX, may refer to a data selector.

### Embodiment 1

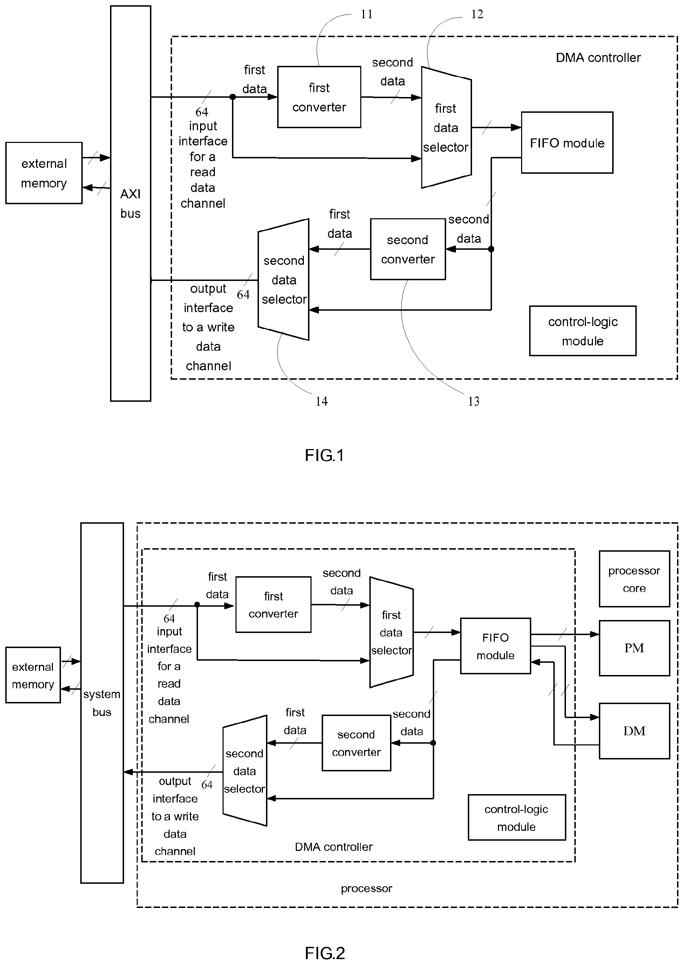

FIG.1 is a diagram of a structure of a DMA controller according to an embodiment herein. As shown in FIG.1, the DMA controller basically consists of an input interface for a read data channel, an output interface to a write data channel, a control-logic module, and a First In First Out (FIFO) module. The DMA controller further includes a first converter, a first data selector, a second converter, and a second data selector.

The first converter 11 is configured for: in response to receiving a first instruction, performing a first operation on first data read from an external memory via the input interface for the read data channel. The first instruction instructs the first converter to perform the first operation.

The first data selector 12 is configured for: in response to determining that a data operation is to be performed, selecting data processed by the first converter 11, and writing the data processed by the first converter 11 into the FIFO module.

The second converter 13 is configured for: in response to receiving a second instruction, performing a second operation on second data read from the FIFO module. The second instruction instructs the second converter 13 to perform the second operation.

The second data selector 14 is configured for: in response to determining that a data operation is to be performed, selecting data processed by the second converter 13, and outputting the data processed by the second converter 13 to the output interface to the write data channel.

According to an embodiment, the first operation may be, but is not limited to: fixed-to-floating conversion. According to an embodiment, the second operation may be, but is not limited to: floating-to-fixed conversion.

According to an embodiment, the first operation and the second operation may be inverse operations to each other. For example, when the first operation is the fixed-to-floating conversion, the second operation may be the floating-to-fixed conversion. When the first operation is decompression, the second operation may be compression.

According to an embodiment, the DMA controller may be connected to the external memory via an Advanced eXtensible Interface (AXI) bus. The AXI bus may be 64-bit wide.

The AXI bus may include a read data channel, a write data channel, a read address channel, a write address channel, and a write response channel.

The first data selector 12 may be further configured for: in response to determining that no data operation is to be performed, directly selecting the first data read from the input interface for the read data channel, and writing the first data into the FIFO module.

The second data selector 14 may be further configured for: in response to determining that no data operation is to be performed, directly selecting the second data read from the FIFO module, and outputting the second data to the output interface to the write data channel.

The first converter 11 may be further configured for: performing the first operation with a ratio of an amount of input data to an amount of output data of 3:4.

The second converter 13 may be further configured for: performing the second operation with a ratio of an amount of input data to an amount of output data of 4:3.

The first converter 11 may be further configured for: performing, on each group of 3 64-bit fixed-point numbers, operations as follows.

In step a1, the first converter 11 may perform fixed-to-floating conversion on bit[47:0] of a first 64-bit fixed-point number; and write, into FIFO_0 and FIFO_1 via the first data selector, the bit[47:0] of the first 64-bit fixed-point number having gone through the fixed-to-floating conversion.

In step a2, the first converter 11 may perform the fixed-to-floating conversion on bit[63:48] of the first 64-bit fixed-point number and bit[55:0] of a second 64-bit fixed-point number; and write, into FIFO_2, FIFO_3, and FIFO_4 via the first data selector, the bit[63:48] of the first 64-bit fixed-point number and the bit[55:0] of the second 64-bit fixed-point number having gone through the fixed-to-floating conversion.

In step a3, the first converter 11 may perform the fixed-to-floating conversion on bit[63:56] of the second 64-bit fixed-point number and bit[63:0] of a third 64-bit fixed-point number; and write, into FIFO_5, FIFO_6, and FIFO_7 via the first data selector, the bit[63:56] of the second 64-bit fixed-point number and the bit[63:0] of the third 64-bit fixed-point number having gone through the fixed-to-floating conversion.

The FIFO module may consist of 8 32-bit FIFO sub-modules denoted respectively by FIFO_0, FIFO_1, FIFO_2, FIFO_3, FIFO_4, FIFO_5, FIFO_6, and FIFO_7.

The second converter 13 may be further configured for performing operations as follows.

In step b1, the second converter 13 may send, to the second data selector, bit[63:0] of a 72-bit fixed-point number produced by floating-to-fixed conversion on data read from {FIFO_2, FIFO_1, FIFO_0}. The second data selector may then select the bit[63:0] of the 72-bit fixed-point number and send the bit[63:0] of the 72-bit fixed-point number into a data writing AXI bus via the output interface to the write data channel.

In step b2, the second converter 13 may send, to the second data selector, bit[55:0] of a 72-bit fixed-point number produced by the floating-to-fixed conversion on data read from {FIFO_5, FIFO_4, FIFO_3} and bit[71:64] of the 72-bit fixed-point number produced by the floating-to-fixed conversion on the data read from the {FIFO_2, FIFO_1, FIFO_0}. The second data selector may then select the sent data and send the selected data into the data writing AXI bus via the output interface to the write data channel.

In step b3, the second converter 13 may send, to the second data selector, bit[47:0] of a 48-bit fixed-point number produced by the floating-to-fixed conversion on data read from {FIFO_7, FIFO_6 } and bit[71:56] of the 72-bit fixed-point number produced by the floating-to-fixed conversion on the data read from the {FIFO_5, FIFO_4, FIFO_3 }. The second data selector may then select the sent data and send the selected data into the data writing AXI bus via the output interface to the write data channel.

In step b4, the operations may be repeated starting from step b1.

The DMA controller may access the external memory in a burst-12 mode in a mode of the first operation or the second operation. The DMA controller may access the external memory in a burst-16 mode in a normal transport mode.

In addition to a normal transport function, the DMA controller may serve to perform the first operation and the second operation. Thus, the DMA controller may reduce a storage overhead of the external memory, and may perform the first operation (such as the fixed-to-floating conversion) and the second operation (such as the floating-to-fixed converting) in place of a processor, reducing an operational pressure on a processor core. For example, fixed-point data may be stored in the external memory. The DMA controller may convert the fixed-point data into floating-point data. The DMA controller may transmit the floating-point data to internal memory of the processor. The processor may then perform an operation on the floating-point data.

### Embodiment 2

FIG.2 is a diagram of a data flow of a DMA controller according to an embodiment herein. The DMA controller may perform both downlink data transport and uplink data transport. The DMA controller may support two operating modes. The DMA controller may support the normal transport mode. The DMA controller may support the mode of the first operation or the second operation.

### Download

When the DMA controller is in the normal transport mode, data may flow sequentially through the external memory, a system bus, the first data selector, the FIFO module, and DM(or PM).

When the DMA controller is in the mode of the first operation, data may flow sequentially through the external memory, the system bus, the first converter, the first data selector, the FIFO module, and the DM (or the PM).

The first data selector may be a one-out-of-two-channel data selector.

### Upload

When the DMA controller is in the normal transport mode, data may flow sequentially through the DM, the FIFO module, the second data selector, the system bus, and the external memory.

When the DMA transport is upload in the mode of the second operation, data may flow sequentially through the DM, the FIFO module, the second converter, the second data selector, the system bus, and the external memory.

An AMBA AXI protocol may be adopted for an interface between the DMA controller and the system bus. Namely, the system bus may be an AXI bus. A data AXI bus in the AXI bus may be 64-bit wide.

The external memory may also be referred to as a system memory.

### Embodiment 3

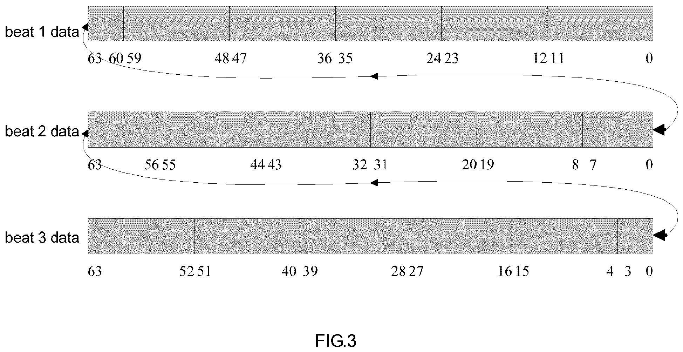

FIG.3 is a diagram of a format of storing first data according to an embodiment herein. The first data may be 12-bit wide. The second data may be 16-bit wide. The first data and the second data may have bit widths that do not match each other.

Assuming that each bit of the first data in the external memory is effective, the first data may appear on the data AXI bus in a format as shown in FIG.3. Data on the 64-bit bus may include 5 or 6 effective 12-bit first data. Data on the 64-bit bus may all be effective first data. Some of the 12-bit first data are separated, in two beats of data of the 64-bit bus. Assuming that a first beat of 64-bit first data is aligned, the 4th beat, the 7th beat, etc., may also be aligned. Namely, data become aligned periodically, and the period is 3 beats.

The first data may be fixed-point. The second data may be floating-point.

### Embodiment 4

The first operation may increase an amount of data (by a ratio of 3:4). The second operation may decrease the amount of data (by a ratio of 4:3). Special hardware processing may be required to implement data transport plus conversion by the DMA controller.

Elaboration may be made below with an example of the first operation being the fixed-to-floating conversion and the second operation being the floating-to-fixed conversion.

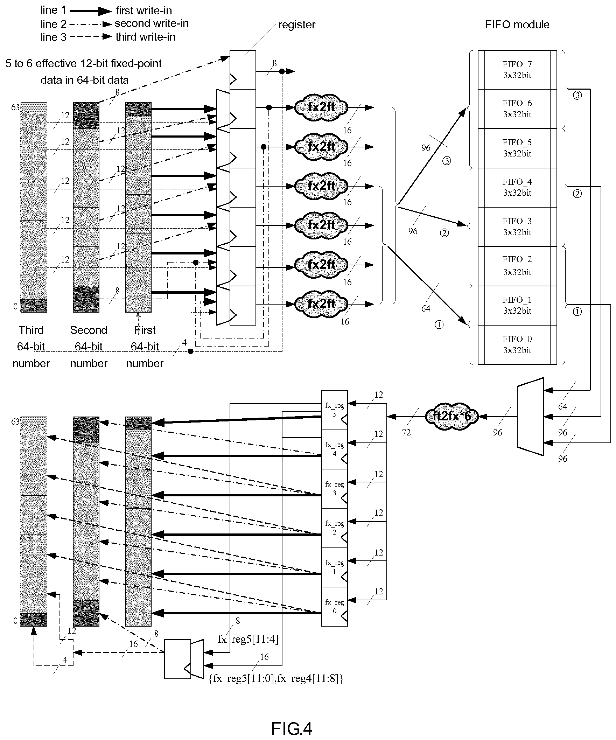

FIG.4 is a diagram of hardware design for implementing fixed-to-floating conversion and floating-to-fixed conversion according to an embodiment herein. FIG.4 illustrates but data flow in the mode of the fixed-to-floating conversion and of the floating-to-fixed conversion, without showing that in the normal transport mode. To adapt to both the normal transport mode and the mode of the fixed-to-floating conversion and the floating-to-fixed conversion, the FIFO module may consist of 8 32-bit FIFO sub-modules. A register in FIG.4 may serve both to optimize timing and to back up data.
(1) In a downlink mode of fixed-to-floating conversion, 6 12-bit registers, 1 8-bit register, 6 12-to-16 fixed-to-floating converting units may be used. In FIG.4, fx2ft may denote a fixed-to-floating converting unit (with an input of a 12-bit fixed-point number and an output of a 16-bit floating-point number). The registers may serve both to beat time and to cache data.
   3-beat fixed-point data may be processed as follows.
   In step a1, fixed-to-floating conversion may be performed on bit[47:0] of a first 64-bit fixed-point number. The bit[47:0] of the first 64-bit fixed-point number having gone through the fixed-to-floating conversion may be written into FIFO_0 and FIFO_1.
   In step a2, the fixed-to-floating conversion may be performed on bit[63:48] of the first 64-bit fixed-point number and bit[55:0] of a second 64-bit fixed-point number. The bit[63:48] of the first 64-bit fixed-point number and the bit[55:0] of the second 64-bit fixed-point number having gone through the fixed-to-floating conversion may be written into FIFO_2, FIFO_3, and FIFO_4.
   In step a3, the fixed-to-floating conversion may be performed on bit[63:56] of the second 64-bit fixed-point number and bit[63:0] of a third 64-bit fixed-point number. The bit[63:56] of the second 64-bit fixed-point number and the bit[63:0] of the third 64-bit fixed-point number having gone through the fixed-to-floating conversion may be written into FIFO_5, FIFO_6, and FIFO_7.
   In step a4, the flow may be repeated starting from step a1.
   First of all, the first 64-bit fixed-point number may be written into the 6 12-bit registers. The bit[63:60] thereof may be written into lower bits of a 12-bit register (as shown by a line 1 → in FIG.4). In the next cycle, the first 64-bit fixed-point number stored in the registers may be converted by the fx2fts into a floating-point number with an increased bit width. A total of 64 bits of floating-point data converted from the first 4 fixed-point numbers may be written into the FIFO module. The remaining 64-4*12=16 bits of fixed-point data may be stitched together with the second 64-bit fixed-point number for the second fixed-to-floating conversion.
   Secondly, bit[63:48] of the first 64-bit fixed-point number stored in the registers may be stitched together with the second 64-bit fixed-point number into 80 bits. The 80 bits in total may be written into the registers (as shown by line 2 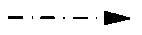 in FIG.4). In the next cycle, 72 bits in the fixed-point data stored in the registers may be converted by the fx2fts into floating-point data of 96 bits. The floating-point data of 96 bits may be written into the FIFO module. The 8-bit fixed-point data remaining in the registers may be stitched together with the third 64-bit fixed-point number for the third fixed-to-floating conversion.
   Then, the last 8 fixed-point data stored in the registers may be stitched together with the third 64-bit fixed-point number into 72 bits. The 72 bits in total may be written into the registers (as shown by line 3 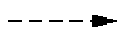 in FIG.4). In the next cycle, the 72-bit fixed-point data stored in the registers may be converted by the fx2fts into floating-point data of 96 bits. The 96 bits of floating-point data may be written into the FIFO module.
   At last, the flow may return to the starting operation.
   It may be seen that in the downlink mode of fixed-to-floating conversion, 64, 96 and 96 bits of data are respectively written into the FIFO module, that is, respectively written into {FIFO_1, FIFO_0}, {FIFO_4, FIFO_3, FIFO_2 }, and {FIFO_7, FIFO_6, FIFO_5}.
(2) In a downlink normal transport mode, as there is no mismatch of the amount of data, the first 4 64-bit data may be written respectively into {FIFO_1, FIFO_0}, {FIFO_3, FIFO_2 }, {FIFO_5, FIFO_4 }, and {FIFO_7, FIFO_6 }.
(3) In an uplink mode of floating-to-fixed conversion, 6 12-bit registers, 1 16-bit register, 6 16-to-12 floating-to-fixed converting unit may be used. In FIG.4, ft2fx may denote a floating-to-fixed converting unit (with an input of 16-bit floating-point data and an output of 12-bit fixed-point data). The registers may serve both to beat time and to cache data.
   3-beat fixed-point data may be generated as follows.
   In step b1, bit[63:0] of a 72-bit fixed-point number produced by floating-to-fixed conversion on data read from {FIFO_2, FIFO_1, FIFO_0} may be sent into a 64-bit data writing AXI bus.
   In step b2, bit[55:0] of a 72-bit fixed-point number produced by the floating-to-fixed conversion on data read from {FIFO_5, FIFO_4, FIFO_3} and bit[71:64] of the 72-bit fixed-point number produced by the floating-to-fixed conversion on the data read from the {FIFO_2, FIFO_1, FIFO_0} may be sent into the 64-bit data writing AXI bus.
   In step b3, bit[47:0] of a 48-bit fixed-point number produced by the floating-to-fixed conversion on data read from {FIFO_7, FIFO_6 } and bit[71:56] of the 72-bit fixed-point number produced by the floating-to-fixed conversion on the data read from the {FIFO_5, FIFO_4, FIFO_3} may be sent into the 64-bit data writing AXI bus.
   In step b4, the flow may repeat from step b1.
   First of all, a total of 96 bits may be read from {FIFO_2, FIFO_1, FIFO_0} of the FIFO module. The 96 bits of data may be converted by the ft2fxs into 72 bits of fixed-point data. The 72 bits of fixed-point data may be written into the 6 12-bit registers. In the next cycle, bit[63:0] of the 72 bits of fixed-point data may be sent, as the first 64-bit data to be written, via the data writing AXI bus. The bit[71:64] thereof, that is, fx_reg5[11:4], may be stitched together with fixed-point data converted from data of second reading from DMA FIFO, to generate the second 64 bits data to be written.
   Secondly, a total of 96 bits may be read from {FIFO_5, FIFO_4, FIFO_3} of the FIFO module. The 96 bits data may be converted by the ft2fxs into 72 bits of fixed-point data. The 72-bit fixed-point data may be written into the 6 12-bit registers. Meanwhile, fx_reg5[11:4] may be written into low bits of the 16-bit register. In the next cycle, bit[7:0] of the 16-bit register may be stitched together with {fx_reg4[7:0], fx_reg3[11:0], fx_reg2[11:0], fx_reg1[11:0], fx_reg0[11:0]} into 64 bits, which may be sent via the data writing AXI bus as the second 64-bits data to be written. {fx_reg5[11:0], fx_reg4[11:8]} may be stitched together with fixed-point data converted from data of third reading from DMA FIFO, to generate the third 64-bit writing the data.
   Then, a total of 64 bits may be read from {FIFO_7, FIFO_6 } of DMA FIFO. The 64 bits of data may be converted by the ft2fxs into 48 bits of fixed-point data. The 48 bits of fixed-point data may be written into 4 12-bit registers. Meanwhile, {fx_reg5[11:0] and fx_reg4[11:8]} may be written into the 16-bit register. In the next cycle, bit[15:0] of the 16-bit register may be stitched together with {fx_reg3[11:0], fx_reg2[11:0], fx_reg1[11:0], and fx_reg0[11:0] into 64 bits, which may be sent via the data writing AXI bus, as the third 64 bits of data to be written.
   At last, the flow may be repeated from the starting operation.
   It may be seen that in the uplink mode of floating-to-fixed conversion, 96, 96, and 64 bits are read respectively from FIFO. Namely, an entire row of DMA FIFO may be read respectively from { FIFO_2, FIFO_1, FIFO_0}, {FIFO_5, FIFO_4, FIFO_3}, and {FIFO_7, FIFO_6 }.
(4) In an uplink normal transport mode, as there is no mismatch of the amount of data, 64 bits may be read respectively from {FIFO_1, FIFO_0}, {FIFO_3, FIFO_2 }, {FIFO_5, FIFO_4 }, and {FIFO_7, FIFO_6 } of FIFO. The read 64 bits of data may be sent directly to the data writing AXI bus.
(5) The DMA controller may access the external memory in the burst-12 mode in the mode of the fixed-to-floating conversion or the floating-to-fixed conversion. The DMA controller may access the external memory in the burst-16 mode in the normal transport mode.

A transmission mode herein may be programmed as the normal transport mode with consistent data at the source end and at the destination end and equal amounts of data at the source end and at the destination end. The transmission mode herein may be programmed as the mode of the fixed-to-floating conversion or the floating-to-fixed conversion, with different types of data, i.e., of fixed-point data or floating-point data, at the source end and at the destination end, and different amounts of data at the source end and at the destination end. In the mode of the fixed-to-floating conversion or the floating-to-fixed conversion, the DMA controller may perform data operation while transporting data.

Those skilled in the art may arrive at implementation other than the fixed-to-floating conversion and the floating-to-fixed conversion according to implementation designed herein. For example, a fixed-to-floating converting unit (denoted by fx2ft in FIG.4) may be a processing sub-unit capable of implementing the first operation. A floating-to-fixed converting unit (denoted by ft2fx in FIG.4) may be a processing sub-unit capable of implementing the second operation. The details will not be repeated here.

### Embodiment 5

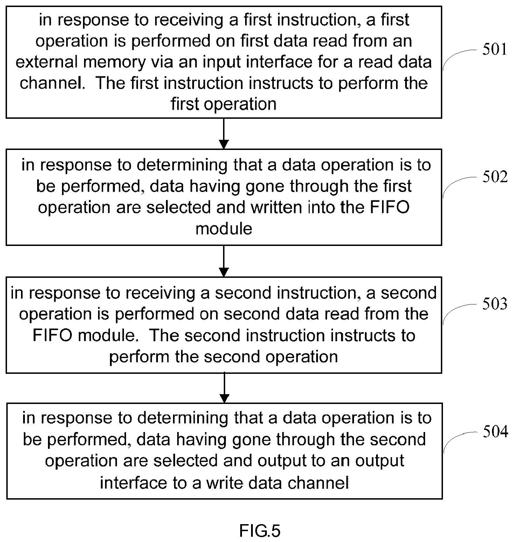

FIG.5 is a flowchart of a method for implementing a DMA controller according to an embodiment herein. The DMA controller includes an input interface for a read data channel, an output interface to a write data channel, a control-logic module, and a First In First Out (FIFO) module. As shown in FIG.5, the method mainly includes steps as follows.

In step 501, in response to receiving a first instruction, a first operation is performed on first data read from an external memory via an input interface for a read data channel. The first instruction instructs to perform the first operation.

The first instruction may be sent by the control-logic module.

In step 502, in response to determining that a data operation is to be performed, data having gone through the first operation are selected and written into the FIFO module.

In step 503, in response to receiving a second instruction, a second operation is performed on second data read from the FIFO module. The second instruction instructs to perform the second operation.

The second instruction may be sent by the control-logic module.

In step 504, in response to determining that a data operation is to be performed, data having gone through the second operation are selected and output to an output interface to a write data channel.

According to an embodiment, the first operation may be, but is not limited to: fixed-to-floating conversion. According to an embodiment, the second operation may be, but is not limited to: floating-to-fixed conversion.

According to an embodiment, the first operation and the second operation may be inverse operations to each other. For example, when the first operation is the fixed-to-floating conversion, the second operation may be the floating-to-fixed conversion. When the first operation is decompression, the second operation may be compression.

According to an embodiment, the DMA controller may be connected to the external memory via an Advanced eXtensible Interface (AXI) bus. The AXI bus may be 64-bit wide.

In response to determining that no data operation is to be performed, the first data read from the input interface for the read data channel may be directly selected and written into the FIFO module.

In response to determining that no data operation is to be performed, the second data read from the FIFO module may be directly selected and output to the output interface to the write data channel.

The first operation may be performed with a ratio of an amount of input data to an amount of output data of 3:4.

The second operation may be performed with a ratio of an amount of input data to an amount of output data of 4:3.

The first operation may be performed on the first data read from the external memory via the input interface for the read data channel, and the data having gone through the first operation may be selected, in response to determining that the data operation is to be performed, and may be written into the FIFO module, as follows.

Operations as follows may be performed on each group of 3 64-bit fixed-point numbers.

In step a1, fixed-to-floating conversion may be performed on bit[47:0] of a first 64-bit fixed-point number. The bit[47:0] of the first 64-bit fixed-point number having gone through the fixed-to-floating conversion may be written into FIFO_0 and FIFO_1.

In step a2, the fixed-to-floating conversion may be performed on bit[63:48] of the first 64-bit fixed-point number and bit[55:0] of a second 64-bit fixed-point number. The bit[63:48] of the first 64-bit fixed-point number and the bit[55:0] of the second 64-bit fixed-point number having gone through the fixed-to-floating conversion may be written into FIFO_2, FIFO_3, and FIFO_4.

In step a3, the fixed-to-floating conversion may be performed on bit[63:56] of the second 64-bit fixed-point number and bit[63:0] of a third 64-bit fixed-point number. The bit[63:56] of the second 64-bit fixed-point number and the bit[63:0] of the third 64-bit fixed-point number having gone through the fixed-to-floating conversion may be written into FIFO_5, FIFO_6, and FIFO_7.

The FIFO module may consist of 8 32-bit FIFO sub-modules denoted respectively by FIFO_0, FIFO_1, FIFO_2, FIFO_3, FIFO_4, FIFO_5, FIFO_6, and FIFO_7.

The second operation may be performed on the second data read from the FIFO module, and the data having gone through the second operation may be selected, in response to determining that the data operation is to be performed, and may be output to the output interface to the write data channel, as follows.

In step b1, bit[63:0] of a 72-bit fixed-point number produced by floating-to-fixed conversion on data read from {FIFO_2, FIFO_1, FIFO_0} may be sent into a data writing AXI bus via the output interface to the write data channel.

In step b2, bit[55:0] of a 72-bit fixed-point number produced by the floating-to-fixed conversion on data read from {FIFO_5, FIFO_4, FIFO_3} and bit[71:64] of the 72-bit fixed-point number produced by the floating-to-fixed conversion on the data read from the {FIFO_2, FIFO_1, FIFO_0} may be sent into the data writing AXI bus via the output interface to the write data channel.

In step b3, bit[47:0] of a 48-bit fixed-point number produced by the floating-to-fixed conversion on data read from {FIFO_7, FIFO_6 } and bit[71:56] of the 72-bit fixed-point number produced by the floating-to-fixed conversion on the data read from the {FIFO_5, FIFO_4, FIFO_3} may be sent into the data writing AXI bus via the output interface to the write data channel.

In step b4, the flow may repeat from step b1.

The FIFO module may consist of 8 32-bit FIFO sub-modules denoted respectively by FIFO_0, FIFO_1, FIFO_2, FIFO_3, FIFO_4, FIFO_5, FIFO_6, and FIFO_7.

The DMA controller may access the external memory in a burst-12 mode in a mode of the first operation or the second operation. The DMA controller may access the external memory in a burst-16 mode in a normal transport mode.

With the method for implementing a DMA controller according to the embodiment, a storage resource of a processor may be saved while reducing an operational load of a processor core, allowing the DMA controller not only to transport data, but also to perform data conversion, thereby saving space of the external memory, reducing an operational pressure on the processor. The DMA controller may choose to perform only data transport. The DMA controller may choose to perform the first or the second operation while transporting the data.

### Embodiment 6

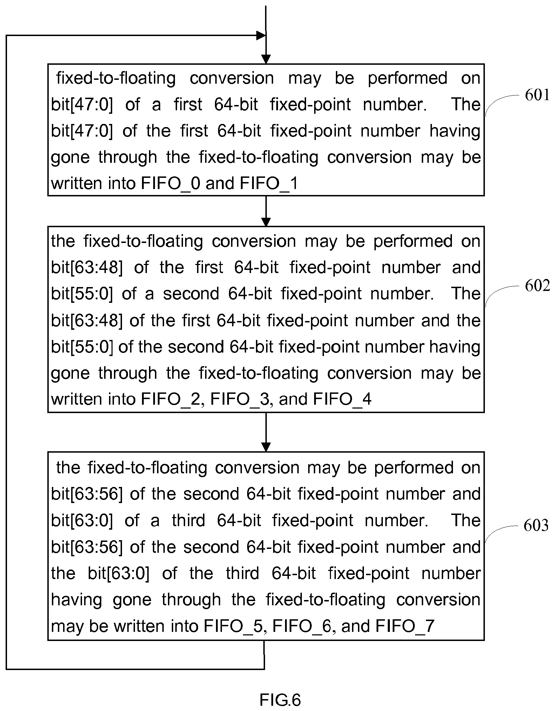

FIG.6 is a flowchart of fixed-to-floating conversion according to an embodiment herein. As shown in FIG.6, the flow mainly may include steps as follows.

In step 601, fixed-to-floating conversion may be performed on bit[47:0] of a first 64-bit fixed-point number. The bit[47:0] of the first 64-bit fixed-point number having gone through the fixed-to-floating conversion may be written into FIFO_0 and FIFO_1.

In step 602, the fixed-to-floating conversion may be performed on bit[63:48] of the first 64-bit fixed-point number and bit[55:0] of a second 64-bit fixed-point number. The bit[63:48] of the first 64-bit fixed-point number and the bit[55:0] of the second 64-bit fixed-point number having gone through the fixed-to-floating conversion may be written into FIFO_2, FIFO_3, and FIFO_4.

In step 603, the fixed-to-floating conversion may be performed on bit[63:56] of the second 64-bit fixed-point number and bit[63:0] of a third 64-bit fixed-point number. The bit[63:56] of the second 64-bit fixed-point number and the bit[63:0] of the third 64-bit fixed-point number having gone through the fixed-to-floating conversion may be written into FIFO_5, FIFO_6, and FIFO_7.

In step 604, a next group of data may be processed starting once again from step 601.

The next group of data may be a second group of data. The second group of data may include a fourth 64-bit fixed-point number, a fifth 64-bit fixed-point number, and a sixth64-bit fixed-point number.

When the second group of data are processed, in step 601 to step 603, the first 64-bit fixed-point number may be replaced by the fourth 64-bit fixed-point number, the second 64-bit fixed-point number may be replaced by the fifth 64-bit fixed-point number, and the third 64-bit fixed-point number may be replaced by the sixth 64-bit fixed-point number.

Namely, the operations in steps 601-603 may be performed on each group of 3 64-bit fixed-point numbers.

The FIFO module in the DMA controller may consist of 8 32-bit FIFO sub-modules. The FIFO sub-modules may be denoted respectively by FIFO_0, FIFO_1, FIFO_2, FIFO_3, FIFO_4, FIFO_5, FIFO_6, and FIFO_7.

### Embodiment 7

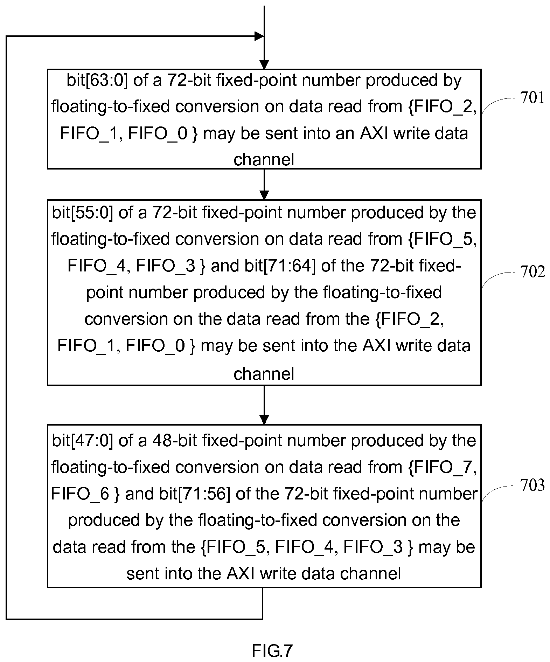

FIG.7 is a flowchart of floating-to-fixed conversion according to an embodiment herein. As shown in FIG.7, the flow mainly may include steps as follows.

In step 701, bit[63:0] of a 72-bit fixed-point number produced by floating-to-fixed conversion on data read from {FIFO_2, FIFO_1, FIFO_0} may be sent into a data writing AXI bus.

In step 702, bit[55:0] of a 72-bit fixed-point number produced by the floating-to-fixed conversion on data read from {FIFO_5, FIFO_4, FIFO_3} and bit[71:64] of the 72-bit fixed-point number produced by the floating-to-fixed conversion on the data read from the {FIFO_2, FIFO_1, FIFO_0} may be sent into the data writing AXI bus.

In step 703, bit[47:0] of a 48-bit fixed-point number produced by the floating-to-fixed conversion on data read from {FIFO_7, FIFO_6} and bit[71:56] of the 72-bit fixed-point number produced by the floating-to-fixed conversion on the data read from the {FIFO_5, FIFO_4, FIFO_3} may be sent into the data writing AXI bus.

In step 704, the flow may go back to step 701.

The FIFO module in the DMA controller may consist of 8 32-bit FIFO sub-modules. The FIFO sub-modules may be denoted respectively by FIFO_0, FIFO_1, FIFO_2, FIFO_3, FIFO_4, FIFO_5, FIFO_6, and FIFO_7.

Note that most embodiments herein have been illustrated with an example of fixed-to-floating conversion and floating-to-fixed conversion. The fixed-to-floating conversion and the floating-to-fixed conversion in an embodiment herein may also be another operation that may be performed by the processor core, as long as the ratio of the amount of I/O data is 3:4 or 4:3. Thus, a storage overhead of the external memory may be reduced, and the DMA controller may perform, in place of the processor, the another operation that be performed by the processor core, reducing the operational pressure on the processor core.

According to an embodiment herein, a non-transitory computer-readable storage medium stores therein a computer program for executing the method for implementing a DMA controller as shown in FIG.5.

The units described as separate components may or may not be physically separated. Components shown as units may be or may not be physical units; they may be located in one place, or distributed on multiple network units. Some or all of the units may be selected to achieve the purpose of a solution of the present embodiments as needed.

In addition, various functional units in each embodiment of the present disclosure may be integrated in one processing unit, or exist as separate units respectively; or two or more such units may be integrated in one unit. The integrated unit may be implemented in form of hardware, or hardware plus software functional unit(s).

Those skilled in the art may understand that all or part of the steps of the embodiments may be implemented by instructing a related hardware through a program, which program may be stored in a (non-transitory) computer-readable storage medium and when executed, execute steps including those of the embodiments. The computer-readable storage medium may be various media that can store program codes, such as mobile storage equipment, Read Only Memory (ROM), a magnetic disk, a CD, and/or the like.

When implemented in form of a software functional module and sold or used as an independent product, an integrated module herein may also be stored in a (non-transitory) computer-readable storage medium. Based on such an understanding, the essential part or a part contributing to prior art of the technical solution of an embodiment of the present disclosure may appear in form of a software product, which software product is stored in storage media, and includes a number of instructions for allowing computer equipment (such as a personal computer, a server, network equipment, and/or the like) to execute all or part of the methods in various embodiments herein. The storage media include various media that can store program codes, such as mobile storage equipment, ROM, a magnetic disk, a CD, and/or the like.

### Industrial Applicability

With at least an embodiment herein, in response to receiving a first instruction, a first operation is performed on first data read from an external memory via an input interface for a read data channel. In response to determining that a data operation is to be performed, data having gone through the first operation are selected and written into the FIFO module. In response to receiving a second instruction, a second operation is performed on second data read from the FIFO module. In response to determining that a data operation is to be performed, data having gone through the second operation are selected and output to an output interface to a write data channel. Thus, a storage resource of a processor may be saved while reducing an operational load of a processor core, extending function of the DMA controller, reducing an operational pressure on the processor core.

## Claims

1. A Direct Memory Access (DMA) controller, comprising:
an input interface for a read data channel;
an output interface to a write data channel;
a control-logic module;
a First In First Out (FIFO) module;
a first converter configured for: in response to receiving a first instruction, performing a first operation on first data read from an external memory via the input interface for the read data channel, wherein the first instruction instructs the first converter to perform the first operation;
a first data selector configured for: in response to determining that a data operation is to be performed, selecting data processed by the first converter, and writing the data processed by the first converter into the FIFO module;
a second converter configured for: in response to receiving a second instruction, performing a second operation on second data read from the FIFO module, wherein the second instruction instructs the second converter to perform the second operation; and
a second data selector configured for: in response to determining that a data operation is to be performed, selecting data processed by the second converter, and outputting the data processed by the second converter to the output interface to the write data channel.

2. The DMA controller according to claim 1, wherein the DMA controller is connected to the external memory via a 64-bit Advanced eXtensible Interface (AXI) bus.

3. The DMA controller according to claim 1,
wherein the first data selector is further configured for: in response to determining that no data operation is to be performed, directly selecting the first data read from the input interface for the read data channel, and writing the first data into the FIFO module,
wherein the second data selector is further configured for: in response to determining that no data operation is to be performed, directly selecting the second data read from the FIFO module, and outputting the second data to the output interface to the write data channel.

4. The DMA controller according to claim 1,
wherein the first converter is further configured for: performing the first operation with a ratio of an amount of input data to an amount of output data of 3:4,
wherein the second converter is further configured for: performing the second operation with a ratio of an amount of input data to an amount of output data of 4:3.

5. The DMA controller according to claim 1,
wherein the first converter is further configured for: performing, on each group of 3 64-bit fixed-point numbers, operations as follows:
in step a1, performing fixed-to-floating conversion on bit[47:0] of a first 64-bit fixed-point number; and writing, into FIFO_0 and FIFO_1 via the first data selector, the bit[47:0] of the first 64-bit fixed-point number having gone through the fixed-to-floating conversion;
in step a2, performing the fixed-to-floating conversion on bit[63:48] of the first 64-bit fixed-point number and bit[55:0] of a second 64-bit fixed-point number; and writing, into FIFO_2, FIFO_3, and FIFO_4 via the first data selector, the bit[63:48] of the first 64-bit fixed-point number and the bit[55:0] of the second 64-bit fixed-point number having gone through the fixed-to-floating conversion;
in step a3, performing the fixed-to-floating conversion on bit[63:56] of the second 64-bit fixed-point number and bit[63:0] of a third 64-bit fixed-point number; and writing, into FIFO_5, FIFO_6, and FIFO_7 via the first data selector, the bit[63:56] of the second 64-bit fixed-point number and the bit[63:0] of the third 64-bit fixed-point number having gone through the fixed-to-floating conversion,
wherein the FIFO module consists of 8 32-bit FIFO sub-modules denoted respectively by FIFO_0, FIFO_1, FIFO_2, FIFO_3, FIFO_4, FIFO_5, FIFO_6, and FIFO_7.

6. The DMA controller according to claim 1, wherein the second converter is further configured for:
in step b1, sending, to the second data selector, bit[63:0] of a 72-bit fixed-point number produced by floating-to-fixed conversion on data read from {FIFO_2, FIFO_1, FIFO_0}, to allow the second data selector to select the bit[63:0] of the 72-bit fixed-point number and send the bit[63:0] of the 72-bit fixed-point number into a data writing AXI bus via the output interface to the write data channel;
in step b2, sending, to the second data selector, bit[55:0] of a 72-bit fixed-point number produced by the floating-to-fixed conversion on data read from {FIFO_5, FIFO_4, FIFO_3} and bit[71:64] of the 72-bit fixed-point number produced by the floating-to-fixed conversion on the data read from the {FIFO_2, FIFO_1, FIFO_0}, to allow the second data selector to select the sent data and send the selected data into the data writing AXI bus via the output interface to the write data channel;
in step b3, sending, to the second data selector, bit[47:0] of a 48-bit fixed-point number produced by the floating-to-fixed conversion on data read from {FIFO_7, FIFO_6 } and bit[71:56] of the 72-bit fixed-point number produced by the floating-to-fixed conversion on the data read from the {FIFO_5, FIFO_4, FIFO_3}, to allow the second data selector to select the sent data and send the selected data into the data writing AXI bus via the output interface to the write data channel;
in step b4, repeating from step b1;
wherein the FIFO module consists of 8 32-bit FIFO sub-modules denoted respectively by FIFO_0, FIFO_1, FIFO_2, FIFO_3, FIFO_4, FIFO_5, FIFO_6, and FIFO_7.

7. The DMA controller according to any one of claims 1-6, wherein the DMA controller accesses the external memory in a burst-12 mode in a mode of the first operation or the second operation, and accesses the external memory in a burst-16 mode in a normal transport mode.

8. A method for implementing a DMA controller, the DMA controller comprising an input interface for a read data channel, an output interface to a write data channel, a control-logic module, and a First In First Out (FIFO) module, the method comprising:
in response to receiving a first instruction, performing a first operation on first data read from an external memory via the input interface for the read data channel, wherein the first instruction instructs to perform the first operation;
in response to determining that a data operation is to be performed, selecting data having gone through the first operation, and writing the data having gone through the first operation into the FIFO module;
in response to receiving a second instruction, performing a second operation on second data read from the FIFO module, wherein the second instruction instructs to perform the second operation;
in response to determining that a data operation is to be performed, selecting data having gone through the second operation, and outputting the data having gone through the second operation to the output interface to the write data channel.

9. The method according to claim 8, wherein the DMA controller is connected to the external memory via a 64-bit Advanced eXtensible Interface (AXI) bus.

10. The method according to claim 8, further comprising:
in response to determining that no data operation is to be performed, directly selecting the first data read from the input interface for the read data channel, and writing the first data into the FIFO module;
in response to determining that no data operation is to be performed, directly selecting the second data read from the FIFO module, and outputting the second data to the output interface to the write data channel.

11. The method according to claim 8, further comprising:
performing the first operation with a ratio of an amount of input data to an amount of output data of 3:4;
performing the second operation with a ratio of an amount of input data to an amount of output data of 4:3.

12. The method according to claim 8, wherein the performing the first operation on the first data read from the external memory via the input interface for the read data channel; in response to determining that the data operation is to be performed, selecting the data having gone through the first operation, and writing the data having gone through the first operation into the FIFO module comprises:
performing, on each group of 3 64-bit fixed-point numbers, operations as follows:
in step a1, performing fixed-to-floating conversion on bit[47:0] of a first 64-bit fixed-point number; and writing, into FIFO_0 and FIFO_1, the bit[47:0] of the first 64-bit fixed-point number having gone through the fixed-to-floating conversion;
in step a2, performing the fixed-to-floating conversion on bit[63:48] of the first 64-bit fixed-point number and bit[55:0] of a second 64-bit fixed-point number; and writing, into FIFO_2, FIFO_3, and FIFO_4, the bit[63:48] of the first 64-bit fixed-point number and the bit[55:0] of the second 64-bit fixed-point number having gone through the fixed-to-floating conversion;
in step a3, performing the fixed-to-floating conversion on bit[63:56] of the second 64-bit fixed-point number and bit[63:0] of a third 64-bit fixed-point number; and writing, into FIFO_5, FIFO_6, and FIFO_7, the bit[63:56] of the second 64-bit fixed-point number and the bit[63:0] of the third 64-bit fixed-point number having gone through the fixed-to-floating conversion;
wherein the FIFO module consists of 8 32-bit FIFO sub-modules denoted respectively by FIFO_0, FIFO_1, FIFO_2, FIFO_3, FIFO_4, FIFO_5, FIFO_6, and FIFO_7.

13. The method according to claim 8, wherein the performing the second operation on the second data read from the FIFO module; in response to determining that the data operation is to be performed, selecting the data having gone through the second operation, and outputting the data having gone through the second operation to the output interface to the write data channel comprises:
in step b1, sending, into a data writing AXI bus via the output interface to the write data channel, bit[63:0] of a 72-bit fixed-point number produced by floating-to-fixed conversion on data read from {FIFO_2, FIFO_1, FIFO_0};
in step b2, sending, into the data writing AXI bus via the output interface to the write data channel, bit[55:0] of a 72-bit fixed-point number produced by the floating-to-fixed conversion on data read from {FIFO_5, FIFO_4, FIFO_3} and bit[71:64] of the 72-bit fixed-point number produced by the floating-to-fixed conversion on the data read from the {FIFO_2, FIFO_1, FIFO_0};
in step b3, sending, into the data writing AXI bus via the output interface to the write data channel, bit[47:0] of a 48-bit fixed-point number produced by the floating-to-fixed conversion on data read from {FIFO_7, FIFO_6 } and bit[71:56] of the 72-bit fixed-point number produced by the floating-to-fixed conversion on the data read from the {FIFO_5, FIFO_4, FIFO_3};
in step b4, repeating from step b1;
wherein the FIFO module consists of 8 32-bit FIFO sub-modules denoted respectively by FIFO_0, FIFO_1, FIFO_2, FIFO_3, FIFO_4, FIFO_5, FIFO_6, and FIFO_7.

14. The method according to any one of claims 8-13, further comprising:
accessing, by the DMA controller, the external memory in a burst-12 mode in a mode of the first operation or the second operation, and accessing the external memory in a burst-16 mode in a normal transport mode.

15. A non-transitory computer-readable storage medium, storing therein computer-executable instructions for executing the method according to any one of claims 8-14.

## Patentansprüche

1. Steuervorrichtung für direkten Speicherzugriff (DMA), umfassend:
eine Eingangsschnittstelle für einen Lesedatenkanal;
eine Ausgangsschnittstelle für einen Schreibdatenkanal;
ein Steuerlogik-Modul;
ein First-In-First-Out- (FIFO-) Modul;
einen ersten Konverter, der konfiguriert ist für: als Reaktion auf das Empfangen einer ersten Anweisung Durchführen einer ersten Operation an ersten Daten, die aus einem externen Speicher über die Eingangsschnittstelle für den Lesedatenkanal gelesen werden, wobei die erste Anweisung den ersten Konverter anweist, die erste Operation durchzuführen;
einen ersten Datenselektor, der konfiguriert ist für: als Reaktion auf das Bestimmen, dass eine Datenoperation durchgeführt werden soll, Auswählen von Daten, die von dem ersten Konverter verarbeitet werden, und Schreiben der durch den ersten Konverter verarbeiteten Daten in das FIFO-Modul;
einen zweiten Konverter, der konfiguriert ist für: als Reaktion auf das Empfangen einer zweiten Anweisung Durchführen einer zweiten Operation an zweiten Daten, die aus dem FIFO-Modul gelesen werden, wobei die zweite Anweisung den zweiten Konverter anweist, die zweite Operation durchzuführen; und
einen zweiten Datenselektor, der konfiguriert ist für: als Reaktion auf das Bestimmen, dass eine Datenoperation durchgeführt werden soll, Auswählen von Daten, die durch den zweiten Konverter verarbeitet werden, und Ausgeben der von dem zweiten Konverter verarbeiteten Daten an die Ausgangsschnittstelle an den Schreibdatenkanal.

2. OMA-Steuervorrichtung nach Anspruch 1, wobei die OMA-Steuervorrichtung mit dem externen Speicher über einen 64-Bit Advanced eXtensible Interface (AXI-) Bus verbunden ist.

3. OMA-Steuervorrichtung nach Anspruch 1,
wobei der erste Datenselektor ferner konfiguriert ist für: als Reaktion auf das Bestimmen, dass keine Datenoperation durchgeführt werden soll, direktes Auswählen der ersten von der Eingangsschnittstelle für den Lesedatenkanal gelesenen Daten, und Schreiben der ersten Daten in das FIFO-Modul,
wobei der zweite Datenselektor ferner konfiguriert ist für: als Reaktion auf das Bestimmen, dass keine Datenoperation durchgeführt werden soll, direktes Auswählen der zweiten von dem FIFO-Modul gelesenen Daten, und Ausgeben der zweiten Daten an die Ausgangsschnittstelle an den Schreibdatenkanal.

4. OMA-Steuervorrichtung nach Anspruch 1,
wobei der erste Konverter ferner konfiguriert ist für: Durchführen der ersten Operation mit einem Verhältnis einer Menge von Eingangsdaten zu einer Menge von Ausgangsdaten von 3:4,
wobei der zweite Konverter ferner konfiguriert ist für: Durchführen der zweiten Operation mit einem Verhältnis einer Menge von Eingabedaten zu einer Menge von Ausgabedaten von 4:3.

5. OMA-Steuervorrichtung nach Anspruch 1,
wobei der erste Konverter ferner konfiguriert ist für: Durchführen, auf jeder Gruppe von 3 64-Bit-Festpunktzahlen, von Operationen wie folgt:
in Schritt a1, Durchführen einer Fest-zu-Gleitpunkt-Konvertierung an Bit[47:0] einer ersten 64-Bit-Festpunktzahl; und Schreiben in FIFO_0 und FIFO_1 über den ersten Datenselektor des Bits[47:0] der ersten 64-Bit-Festpunktzahl, die die Fest-Gleitpunkt-Konvertierung durchlaufen hat;
in Schritt a2, Durchführen der Fest-zu-Gleitpunkt-Konvertierung an Bit[63:48] der ersten 64-Bit-Festpunktzahl und Bit[55:0] einer zweiten 64-Bit-Festpunktzahl; und Schreiben in FIFO_2, FIFO_3 und FIFO_4 über den ersten Datenselektor des Bits[63:48] der ersten 64-Bit-Festpunktzahl und des Bits[55:0] der zweiten 64-Bit-Festpunktzahl, die die Fest-zu-Gleitpunkt-Konvertierung durchlaufen haben;
in Schritt a3, Durchführen der Fest-zu-Gleitpunkt-Konvertierung an Bit[63:56] der zweiten 64-Bit-Festpunktzahl und an Bit[63:0] einer dritten 64-Bit-Festpunktzahl; und Schreiben in FIFO_5, FIFO_6 und FIFO_7 über den ersten Datenselektor des Bits[63:56] der zweiten 64-Bit-Festpunktzahl und des Bits[63:0] der dritten 64-Bit-Festpunktzahl, die die Fest-zu-Gleitpunkt-Konvertierung durchlaufen haben;
wobei das FIFO-Modul aus 8 32-Bit-FIFO-Untermodulen besteht, die jeweils mit FIFO_0, FIFO_1, FIFO_2, FIFO_3, FIFO_4, FIFO_5, FIFO_6 und FIFO_7 bezeichnet sind.

6. OMA-Steuervorrichtung nach Anspruch 1, wobei der zweite Wandler ferner konfiguriert ist für:
in Schritt b1, Senden von Bit[63:0] einer 72-Bit-Festpunktzahl an den zweiten Datenselektor, die durch Gleit-zu-Festpunkt-Konvertierung auf aus {FIFO_2, FIFO_1, FIFO_0} gelesenen Daten erzeugt wird, um zu ermöglichen, dass der zweite Datenselektor das Bit[63:0] der 72-Bit-Festpunktzahl auswählt und das Bit[63:0] der 72-Bit-Festpunktzahl in einen Datenschreib-AXI-Bus über die Ausgangsschnittstelle an den Schreibdatenkanal sendet;
in Schritt b2, Senden des Bits[55:0] einer 72-Bit-Festpunktzahl, die durch die Gleit-zu-Festpunkt-Konvertierung auf aus {FIFO_5, FIFO_4, FIFO_3} gelesenen Daten erzeugt wird, und des Bits[71:64] der 72-Bit-Festpunktzahl, die durch die Gleit-zu-Fest-Konvertierung auf den aus {FIFO_2, FIFO_1, FIFO_0} gelesenen Daten erzeugt wird, an den zweiten Datenselektor, um zu ermöglichen, dass der zweite Datenselektor die gesendeten Daten auswählt und die ausgewählten Daten in den Datenschreib-AXI-Bus über die Ausgangsschnittstelle an den Schreibdatenkanal sendet;
in Schritt b3 Senden des Bits[47:0] einer 48-Bit-Festpunktzahl, die durch die Gleit-zu-Festpunkt-Konvertierung auf aus {FIFO_7, FIFO_6} gelesenen Daten erzeugt wurde, und des Bits[71:56] der 72-Bit-Festpunktzahl, die durch die Gleit-zu-Fest-Konvertierung auf den aus {FIFO_5, FIFO_4, FIFO_3} gelesenen Daten erzeugt wurde, an den zweiten Datenselektor, um zu ermöglichen, dass der zweite Datenselektor die gesendeten Daten auswählt und die ausgewählten Daten in den Datenschreib-AXI-Bus über die Ausgangsschnittstelle an den Schreibdatenkanal sendet;
in Schritt b4, Wiederholen von Schritt b1;
wobei das FIFO-Modul aus 8 32-Bit-FIFO-Untermodulen besteht, die jeweils mit FIFO_0, FIFO_1, FIFO_2, FIFO_3, FIFO_4, FIFO_5, FIFO_6 und FIFO_7 bezeichnet sind.

7. OMA-Steuervorrichtung nach einem der Ansprüche 1-6, wobei die OMA-Steuervorrichtung auf den externen Speicher in einem Burst-12-Modus in einem Modus der ersten Operation oder der zweiten Operation zugreift, und auf den externen Speicher in einem Burst-16-Modus in einem normalen Transportmodus zugreift.

8. Verfahren zum Implementieren einer OMA-Steuervorrichtung, wobei die OMA-Steuervorrichtung eine Eingangsschnittstelle für einen Lesedatenkanal, eine Ausgangsschnittstelle an einen Schreibdatenkanal, ein Steuerlogik-Modul und ein First-In-First-Out- (FIFO-) Modul umfasst, wobei das Verfahren umfasst:
als Reaktion auf das Empfangen einer ersten Anweisung Durchführen einer ersten Operation an ersten Daten, die aus einem externen Speicher über die Eingangsschnittstelle für den Lesedatenkanal gelesen werden, wobei die erste Anweisung anweist, die erste Operation durchzuführen;
als Reaktion auf das Bestimmen, dass eine Datenoperation durchgeführt werden soll, Auswählen von Daten, die die erste Operation durchlaufen haben, und Schreiben der Daten, die die erste Operation durchlaufen haben, in das FIFO-Modul;
als Reaktion auf das Empfangen einer zweiten Anweisung Durchführen einer zweiten Operation an zweiten Daten, die aus dem FIFO-Modul gelesen werden, wobei die zweite Anweisung anweist, die zweite Operation durchzuführen; und
als Reaktion auf das Bestimmen, dass eine Datenoperation durchgeführt werden soll, Auswählen von Daten, die die zweite Operation durchlaufen haben, und Ausgeben der Daten, die die zweite Operation durchlaufen haben, an die Ausgangsschnittstelle an den Schreibdatenkanal.

9. Verfahren nach Anspruch 8, wobei die OMA-Steuervorrichtung mit dem externen Speicher über einen 64-Bit Advanced eXtensible Interface (AXI-) Bus verbunden ist.

10. Verfahren nach Anspruch 8, ferner umfassend:
als Reaktion auf das Bestimmen, dass keine Datenoperation durchgeführt werden soll, direktes Auswählen der ersten von der Eingangsschnittstelle gelesenen Daten für den Lesedatenkanal, und Schreiben der ersten Daten in das FIFO-Modul,
als Reaktion auf das Bestimmen, dass keine Datenoperation durchgeführt werden soll, direktes Auswählen der zweiten von dem FIFO-Modul gelesenen Daten, und Ausgeben der zweiten Daten an die Ausgangsschnittstelle an den Schreibdatenkanal.

11. Verfahren nach Anspruch 8, ferner umfassend:
Durchführen der ersten Operation mit einem Verhältnis einer Menge von Eingangsdaten zu einer Menge von Ausgangsdaten von 3:4,
Durchführen der zweiten Operation mit einem Verhältnis einer Menge von Eingabedaten zu einer Menge von Ausgabedaten von 4:3.

12. Verfahren nach Anspruch 8, wobei das Durchführen der ersten Operation an den ersten Daten, die aus dem externen Speicher über die Eingangsschnittstelle für den Lesedatenkanal gelesen werden; als Reaktion auf das Bestimmen, dass die Datenoperation durchgeführt werden soll, das Auswählen der Daten, die die erste Operation durchlaufen haben und das Schreiben der Daten, die die erste Operation durchlaufen haben, in das FIFO-Modul umfasst:
Durchführen, auf jeder Gruppe von 3 64-Bit-Festpunktzahlen, von Operationen wie folgt:
in Schritt a1, Durchführen einer Fest-zu-Gleitpunkt-Konvertierung an Bit[47:0] einer ersten 64-Bit-Festpunktzahl; und Schreiben in FIFO_0 und FIFO_1 des Bits[47:0] der ersten 64-Bit-Festpunktzahl, die die Fest-Gleitpunkt-Konvertierung durchlaufen hat;
in Schritt a2, Durchführen der Fest-zu-Gleitpunkt-Konvertierung an Bit[63:48] der ersten 64-Bit-Festpunktzahl und Bit[55:0] einer zweiten 64-Bit-Festpunktzahl; und Schreiben in FIFO_2, FIFO_3 und FIFO_4 des Bits[63:48] der ersten 64-Bit-Festpunktzahl und des Bits[55:0] der zweiten 64-Bit-Festpunktzahl, die die Fest-zu-Gleitpunkt-Konvertierung durchlaufen haben;
in Schritt a3, Durchführen der Fest-zu-Gleitpunkt-Konvertierung an Bit[63:56] der zweiten 64-Bit-Festpunktzahl und Bit[63:0] einer dritten 64-Bit-Festpunktzahl; und Schreiben in FIFO_5, FIFO_6 und FIFO_7 des Bits[63:56] der zweiten 64-Bit-Festpunktzahl und des Bits[63:0] der dritten 64-Bit-Festpunktzahl, die die Fest-zu-Gleitpunkt-Konvertierung durchlaufen haben;
wobei das FIFO-Modul aus 8 32-Bit-FIFO-Untermodulen besteht, die jeweils mit FIFO_0, FIFO_1, FIFO_2, FIFO_3, FIFO_4, FIFO_5, FIFO_6 und FIFO_7 bezeichnet sind.

13. Verfahren nach Anspruch 8, wobei das Durchführen der zweiten Operation an den zweiten Daten, die aus dem FIFO-Modul gelesen werden; als Reaktion auf das Bestimmen, dass die Datenoperation durchgeführt werden soll, das Auswählen der Daten, die die zweite Operation durchlaufen haben und das Ausgeben der Daten, die die zweite Operation durchlaufen haben, an die Ausgangsschnittstelle des Schreibdatenkanals umfasst:
in Schritt b1, Senden von Bit[63:0] einer 72-Bit-Festpunktzahl, die durch Gleit-zu-Festpunkt-Konvertierung auf aus {FIFO_2, FIFO_1, FIFO_0 } gelesenen Daten erzeugt wird, in einen Datenschreib-AXI-Bus über die Ausgangsschnittstelle an den Schreibdatenkanal;
in Schritt b2, Senden des Bits[55:0] einer 72-Bit-Festpunktzahl, die durch die Gleit-zu-Festpunkt-Konvertierung auf aus {FIFO_5, FIFO 4, FIFO_3} gelesenen Daten erzeugt wird, und des Bits[71:64] der 72-Bit-Festpunktzahl, die durch die Gleit-zu-Fest-Konvertierung auf den aus {FIFO_2, FIFO_1, FIFO_0} gelesenen Daten erzeugt wird, in den Datenschreib-AXI-Bus über die Ausgangsschnittstelle an den Schreibdatenkanal;
in Schritt b3, Senden des Bits[47:0] einer 48-Bit-Festpunktzahl, die durch die Gleit-zu-Festpunkt-Konvertierung auf aus {FIFO_7, FIFO_6} gelesenen Daten erzeugt wird, und des Bits[71:56] der 72-Bit-Festpunktzahl, die durch die Gleit-zu-Fest-Konvertierung auf den aus {FIFO_5, FIFO_4, FIFO_3} gelesenen Daten erzeugt wird, in den Datenschreib-AXI-Bus über die Ausgangsschnittstelle an den Schreibdatenkanal;
in Schritt b4, Wiederholen von Schritt b1;
wobei das FIFO-Modul aus 8 32-Bit-FIFO-Untermodulen besteht, die jeweils mit FIFO_0, FIFO_1, FIFO_2, FIFO_3, FIFO_4, FIFO_5, FIFO_6 und FIFO_7 bezeichnet sind.

14. Verfahren nach einem der Ansprüche 8-13, ferner umfassend:
Zugreifen durch die DMA-Steuervorrichtung auf den externen Speicher in einem Burst-12-Modus in einem Modus der ersten Operation oder der zweiten Operation, und Zugreifen auf den externen Speicher in einem Burst-16-Modus in einem normalen Transportmodus.

15. Nichtflüchtiges computerlesbares Speichermedium, das darin computerausführbare Anweisungen zum Ausführen des Verfahrens nach einem der Ansprüche 8-14 speichert.

## Revendications

1. Contrôleur d'accès direct à la mémoire (DMA), comprenant :
une interface d'entrée pour un canal de données de lecture ;
une interface de sortie à un canal de données d'écriture ;
un module logique de commande ;
un module premier entré, premier sorti (FIFO) ;
un premier convertisseur configuré pour : en réponse à la réception d'une première instruction, effectuer une première opération sur des premières données lues à partir d'une mémoire externe via l'interface d'entrée pour le canal de données de lecture, dans lequel la première instruction ordonne au premier convertisseur d'effectuer la première opération ;
un premier sélecteur de données configuré pour : en réponse à la détermination qu'une opération de données doit être effectuée, sélectionner des données traitées par le premier convertisseur, et écrire les données traitées par le premier convertisseur dans le module FIFO ;
un second convertisseur configuré pour : en réponse à la réception d'une seconde instruction, effectuer une seconde opération sur des secondes données lues à partir du module FIFO, dans lequel la seconde instruction ordonne au second convertisseur d'effectuer la seconde opération ; et
un second sélecteur de données configuré pour : en réponse à la détermination qu'une opération de données doit être effectuée, sélectionner des données traitées par le second convertisseur, et sortir les données traitées par le second convertisseur à l'interface de sortie au canal de données d'écriture.

2. Contrôleur DMA selon la revendication 1, dans lequel le contrôleur DMA est connecté à la mémoire externe via un bus évolué d'interfaces extensibles AXI de 64 bits.

3. Contrôleur DMA selon la revendication 1,
dans lequel le premier sélecteur de données est en outre configuré pour : en réponse à la détermination qu'aucune opération de données ne doit être effectuée, sélectionner directement les premières données lues à partir de l'interface d'entrée pour le canal de données de lecture, et écrire les premières données dans le module FIFO,
dans lequel le second sélecteur de données est en outre configuré pour : en réponse à la détermination qu'aucune opération de données ne doit être effectuée, sélectionner directement les secondes données lues à partir du module FIFO, et sortir les secondes données à l'interface de sortie au canal de données d'écriture.

4. Contrôleur DMA selon la revendication 1,
dans lequel le premier convertisseur est en outre configuré pour : effectuer la première opération avec un rapport d'une quantité de données d'entrée par rapport à une quantité de données de sortie de 3 : 4,
dans lequel le second convertisseur est en outre configuré pour : effectuer la seconde opération avec un rapport d'une quantité de données d'entrée par rapport à une quantité de données de sortie de 4 : 3.

5. Contrôleur DMA selon la revendication 1,
dans lequel le premier convertisseur est en outre configuré pour : effectuer, sur chaque groupe de 3 nombres à virgule fixe de 64 bits, des opérations comme suit :
à l'étape a1, effectuer une conversion fixe à flottant sur le bit [47:0] d'un premier nombre à virgule fixe de 64 bits ; et écrire, dans FIFO_0 et FIFO_1 via le premier sélecteur de données, le bit [47:0] du premier nombre à virgule fixe de 64 bits ayant subi la conversion fixe à flottant ;
à l'étape a2, effectuer la conversion fixe à flottant sur le bit [63:48] du premier nombre à virgule fixe de 64 bits et sur le bit [55:0] d'un second nombre à virgule fixe de 64 bits ; et écrire, dans FIFO_2, FIFO_3 et FIFO_4 via le premier sélecteur de données, le bit [63:48] du premier nombre à virgule fixe de 64 bits et le bit [55:0] du second nombre à virgule fixe de 64 bits ayant subi la conversion fixe à flottant ;
à l'étape a3, effectuer la conversion fixe à flottant sur le bit [63:56] du second nombre à virgule fixe de 64 bits et sur le bit [63:0] d'un troisième nombre à virgule fixe de 64 bits ; et écrire, dans FIFO_5, FIFO_6 et FIFO_7 via le premier sélecteur de données, le bit [63:56] du second nombre à virgule fixe de 64 bits et le bit [63:0] du troisième nombre à virgule fixe de 64 bits ayant subi la conversion fixe à flottant,
dans lequel le module FIFO est constitué de 8 sous-modules FIFO de 32 bits désignés respectivement par FIFO_0, FIFO_1, FIFO_2, FIFO_3, FIFO_4, FIFO_5, FIFO_6, et FIFO_7.

6. Contrôleur DMA selon la revendication 1, dans lequel le second convertisseur est en outre configuré pour :
à l'étape b1, envoyer, au second sélecteur de données, le bit [63:0] d'un nombre à virgule fixe de 72 bits produit par la conversion de flottant à fixe sur les données lues à partir de {FIFO_2, FIFO_1, FIFO_0}, pour permettre au second sélecteur de données de sélectionner le bit [63:0] du nombre à virgule fixe de 72 bits et d'envoyer le bit [63:0] du nombre à virgule fixe de 72 bits dans un bus AXI d'écriture de données via l'interface de sortie au canal de données d'écriture ;
à l'étape b2, envoyer, au second sélecteur de données, le bit [55:0] d'un nombre à virgule fixe de 72 bits produit par la conversion flottant à fixe sur les données lues à partir de {FIFO_5, FIFO_4, FIFO_3} et le bit [71:64] du nombre à virgule fixe de 72 bits produit par la conversion flottant à fixe sur les données lues à partir de {FIFO_2, FIFO_1, FIFO_0}, pour permettre au second sélecteur de données de sélectionner les données envoyées et d'envoyer les données sélectionnées dans le bus AXI d'écriture de données via l'interface de sortie au canal de données d'écriture ;
à l'étape b3, envoyer, au second sélecteur de données, le bit [47:0] d'un nombre à virgule fixe de 48 bits produit par la conversion flottant à fixe sur les données lues à partir de {FIFO_7, FIFO_6} et le bit [71:56] du nombre à virgule fixe de 72 bits produit par la conversion flottant à fixe sur les données lues à partir du {FIFO_5, FIFO_4, FIFO_3}, pour permettre au second sélecteur de données de sélectionner les données envoyées et d'envoyer les données sélectionnées dans le bus AXI d'écriture de données via l'interface de sortie au canal de données d'écriture ;
à l'étape b4, répéter à partir de l'étape b1 ;
dans lequel le module FIFO est constitué de 8 sous-modules FIFO de 32 bits désignés respectivement par FIFO_0, FIFO_1, FIFO_2, FIFO_3, FIFO_4, FIFO_5, FIFO_6, et FIFO_7.

7. Contrôleur DMA selon l'une quelconque des revendications 1 à 6, dans lequel le contrôleur DMA accède à la mémoire externe en mode rafale-12 dans un mode de la première opération ou de la seconde opération, et accède à la mémoire externe en mode rafale-16 dans un mode de transport normal.

8. Procédé de mise en œuvre d'un contrôleur DMA, le contrôleur DMA comprenant une interface d'entrée pour un canal de données de lecture, une interface de sortie à un canal de données d'écriture, un module de logique de commande et un module premier entré, premier sorti (FIFO), le procédé comprenant :
en réponse à la réception d'une première instruction, l'exécution d'une première opération sur des premières données lues à partir d'une mémoire externe via l'interface d'entrée pour le canal de données de lecture, dans lequel la première instruction ordonne d'exécuter la première opération ;
en réponse à la détermination qu'une opération de données doit être effectuée, sélectionner des données ayant subi la première opération, et écrire les données ayant subi la première opération dans le module FIFO ;
en réponse à la réception d'une seconde instruction, effectuer une seconde opération sur des secondes données lues à partir du module FIFO, dans lequel la seconde instruction ordonne d'exécuter la seconde opération ;
en réponse à la détermination du fait qu'une opération de données doit être effectuée, sélectionner des données ayant subi la seconde opération, et sortir les données ayant traversé la seconde opération à l'interface de sortie au canal de données d'écriture.

9. Procédé selon la revendication 8, dans lequel le contrôleur DMA est connecté à la mémoire externe via un bus évolué d'interfaces extensibles AXI de 64 bits.

10. Procédé selon la revendication 8, comprenant en outre :
en réponse à la détermination qu'aucune opération de données ne doit être effectuée, la sélection directe des premières données lues à partir de l'interface d'entrée pour le canal de données de lecture, et l'écriture des premières données dans le module FIFO ;
en réponse à la détermination qu'aucune opération de données ne doit être effectuée, la sélection directe des secondes données lues à partir du module FIFO, et la sortie des secondes données à l'interface de sortie au canal de données d'écriture.

11. Procédé selon la revendication 8, comprenant en outre :
l'exécution de la première opération avec un rapport d'une quantité de données d'entrée par rapport à une quantité de données de sortie de 3 : 4 ;
l'exécution de la seconde opération avec un rapport d'une quantité de données d'entrée par rapport à une quantité de données de sortie de 4: 3.

12. Procédé selon la revendication 8, dans lequel la première opération sur les premières données lues à partir de la mémoire externe via l'interface d'entrée pour le canal de données de lecture est effectuée ; en réponse à la détermination que l'opération de données doit être effectuée, la sélection des données ayant subi la première opération et l'écriture des données ayant subi la première opération dans le module FIFO comprend :
l'exécution, sur chaque groupe de 3 nombres à virgule fixe de 64 bits, des opérations comme suit:
à l'étape a1, l'exécution d'une conversion fixe à flottant sur le bit [47:0] d'un premier nombre à virgule fixe de 64 bits ; et l'écriture, dans FIFO_0 et FIFO_1, du bit [47:0] du premier nombre à virgule fixe de 64 bits ayant subi la conversion fixe à flottant ;
à l'étape a2, l'exécution de la conversion fixe à flottant sur le bit [63:48] du premier nombre à virgule fixe de 64 bits et sur le bit [55:0] d'un second nombre à virgule fixe de 64 bits ; et
l'écriture, dans FIFO_2, FIFO_3 et FIFO_4, du bit [63:48] du premier nombre à virgule fixe de 64 bits et du bit [55:0] du second nombre à virgule fixe de 64 bits ayant subi la conversion fixe à flottant ;
à l'étape a3, l'exécution de la conversion fixe à flottant sur le bit [63:56] du second nombre à virgule fixe de 64 bits et sur le bit [63:0] d'un troisième nombre à virgule fixe de 64 bits ; et l'écriture, dans FIFO_5, FIFO_6 et FIFO_7, du bit [63:56] du second nombre à virgule fixe de 64 bits et du bit [63:0] du troisième nombre à virgule fixe de 64 bits ayant subi la conversion fixe à flottant ;
dans lequel le module FIFO est constitué de 8 sous-modules FIFO de 32 bits désignés respectivement par FIFO_0, FIFO_1, FIFO_2, FIFO_3, FIFO_4, FIFO_5, FIFO_6, et FIFO_7.

13. Procédé selon la revendication 8, dans lequel la seconde opération sur les secondes données lues à partir du module FIFO est effectuée ; en réponse à la détermination que l'opération de données doit être effectuée, la sélection des données ayant subi la seconde opération, et la sortie des données ayant subi la seconde opération à l'interface de sortie au canal de données d'écriture comprend :
à l'étape b1, l'envoi, dans un bus AXI d'écriture de données via l'interface de sortie au canal de données d'écriture, le bit [63:0] d'un nombre à virgule fixe de 72 bits produit par conversion flottant à fixe sur les données lues à partir de {FIFO_2, FIFO_1, FIFO_0} ;
à l'étape b2, l'envoi, dans le bus AXI d'écriture de données via l'interface de sortie au canal de données d'écriture, le bit [55:0] d'un nombre à virgule fixe de 72 bits produit par la conversion flottant à fixe sur les données lues à partir de {FIFO_5, FIFO_4, FIFO_3} et le bit [71:64] du nombre à virgule fixe de 72 bits produit par la conversion flottant à fixe sur les données lues à partir de {FIFO_2, FIFO_1, FIFO O} ;
à l'étape b3, l'envoi, dans le bus AXI d'écriture de données via l'interface de sortie au canal de données d'écriture, le bit [47:0] d'un nombre à virgule fixe de 48 bits produit par la conversion flottant à fixe sur les données lues à partir de {FIFO_7, FIFO_6} et le bit [71:56] du nombre à virgule fixe de 72 bits produit par la conversion flottant à fixe sur les données lues à partir du {FIFO_5, FIFO 4, FIFO_3} ;
à l'étape b4, la répétition à partir de l'étape b1 ;
dans lequel le module FIFO est constitué de 8 sous-modules FIFO de 32 bits désignés respectivement par FIFO_0, FIFO_1, FIFO_2, FIFO_3, FIFO_4, FIFO_5, FIFO_6, et FIFO_7.

14. Procédé selon l'une quelconque des revendications 8 à 13, comprenant en outre :
l'accès, par le contrôleur DMA, à la mémoire externe en mode rafale-12 dans un mode de la première opération ou de la seconde opération, et l'accès à la mémoire externe en mode rafale-16 dans un mode de transport normal.

15. Support de stockage non transitoire lisible par ordinateur, stockant à l'intérieur de celui-ci des instructions exécutables par ordinateur pour exécuter le procédé selon l'une quelconque des revendications 8 à 14.
